# EUROPEAN PATENT APPLICATION

(11) **EP 4 375 906 A1**
(43) Date of publication of application: **29.05.2024**
(21) Application number: 23210905.8
(22) Date of filing: 20.11.2023
(51) Int. Cl.: G06Q 20/20, G07G 1/00, G07G 3/00

(54) **APPARATUS AND METHOD FOR DETECTING NUMBER OF ARTICLES AND ELECTRONIC DEVICE**

(30) Priority: 25.11.2022 CN 202211487552
(71) Applicant: Fujitsu Limited, Kawasaki-shi, Kanagawa 211-8588 (JP)
(72) Inventor: ZHU, Xiantan, Beijing, 100022 (CN); TAN, Zhiming, Beijing, 100022 (CN)
(74) Representative: Hoffmann Eitle

(57) **Abstract**

Embodiments of this disclosure provide an apparatus and method for detecting the number of articles and an electronic device. The apparatus for detecting the number of articles includes: a first detecting device configured to detect a shopping container in an image; a classifying device configured to classify an image of articles in the shopping container by using a classifier, and determine the number of articles corresponding to a classification result; and a number setting device configured to take the number of articles determined by the classifying device as a prediction value of the number of articles in the shopping container when the number of articles determined by the classifying device is greater than a first threshold. In this disclosure, the number of the articles in the shopping container is determined by using a relationship between the number of the articles to which the classification result of the image corresponds and the threshold. Hence, the number of the articles in the shopping container may be accurately detected at a relatively low cost.

## Description

### Technical Field

This disclosure relates to the field of image detection technologies.

### Background

It is very simple and convenient for customers in self-checkout at a dedicated checkout counter, which may reduce the number of store staff and reduce operating costs.

In order to avoid errors in calculating the number of articles in a self-checkout process, some techniques for confirming the number of articles have emerged. For example, in some techniques, detecting devices may read information on radio frequency identification (RFID) tags set in the articles to detect such information as the number and prices of the articles; for another example, in other techniques, a computer vision processing device is used to determine whether a shopping basket is empty or full of articles, and evaluate a possibility of incorrect calculation of articles.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary of the Disclosure

The above techniques used to confirm the number of articles have some limitations. For example, in detecting the number of articles based on the information on RFID tags, it is necessary to install an RFID tag for each article, which is costly and labor-intensive; and the technique of using a computer vision processing device may only determine whether a shopping basket is empty or full, and cannot accurately detect the number of articles in the shopping basket.

In order to solve at least one of the above problems, embodiments of this disclosure provide an apparatus and method for detecting the number of articles and an electronic device, expecting that the number of the articles in a shopping container may be accurately detected at a relatively low cost.

According to an aspect of the embodiments of this disclosure, there is provided an apparatus for detecting the number of articles, the apparatus for detecting the number of articles including:
a first detecting device configured to detect a shopping container in an image;
a classifying device configured to classify an image of articles in the shopping container by using a classifier, and determine the number of articles corresponding to a classification result; and
a number setting device configured to take the number of articles determined by the classifying device as a prediction value of the number of articles in the shopping container when the number of articles determined by the classifying device is greater than a first threshold.

According to another aspect of the embodiments of this disclosure, there is provided a method for detecting the number of articles, the method for detecting the number of articles including:
detecting a shopping container in an image;
classifying an image of articles in the shopping container by using a classifier, and determining the number of articles corresponding to a classification result; and
taking the determined number of articles as a prediction value of the number of articles in the shopping container when the determined number of articles is greater than a first threshold.

According to a further aspect of the embodiments of this disclosure, there is provided an electronic device, including a memory and a processor, the memory storing a computer program, and the processor being configured to execute the computer program to carry out the method for detecting the number of articles described above.

An advantage of the embodiments of this disclosure exists in that the number of the articles in the shopping container is determined by using a relationship between the number of the articles to which the result obtained by classifying the image corresponds and the threshold. Hence, the number of the articles in the shopping container may be accurately detected at a relatively low cost.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

### Brief Description of the Drawings

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of an apparatus for detecting the number of articles of an embodiment of this disclosure;
FIG. 2 is a schematic diagram of an application scenario of an apparatus for detecting the number of articles of the embodiment of this disclosure;
FIG. 3 is a schematic diagram of a correspondence between a threshold and a prediction value;
FIG. 4 is a schematic diagram of processing different images by the apparatus 100 for detecting the number of articles of this disclosure;
FIG. 5 is a schematic diagram of a method for detecting the number of articles; and
FIG. 6 is a schematic diagram of an electronic device of an embodiment of this disclosure.

### Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

Features that are described and/or illustrated with respect to one embodiment may be used in the same way or in a similar way in one or more other embodiments and/or in combination with or instead of the features of the other embodiments. The term "comprises/comprising/includes/including" when used in this specification is taken to specify the presence of stated features, integers, steps or components but does not preclude the presence or addition of one or more other features, integers, steps, components or groups thereof.

### Embodiment of a first aspect

The embodiment of this disclosure provides an apparatus for detecting the number of articles.

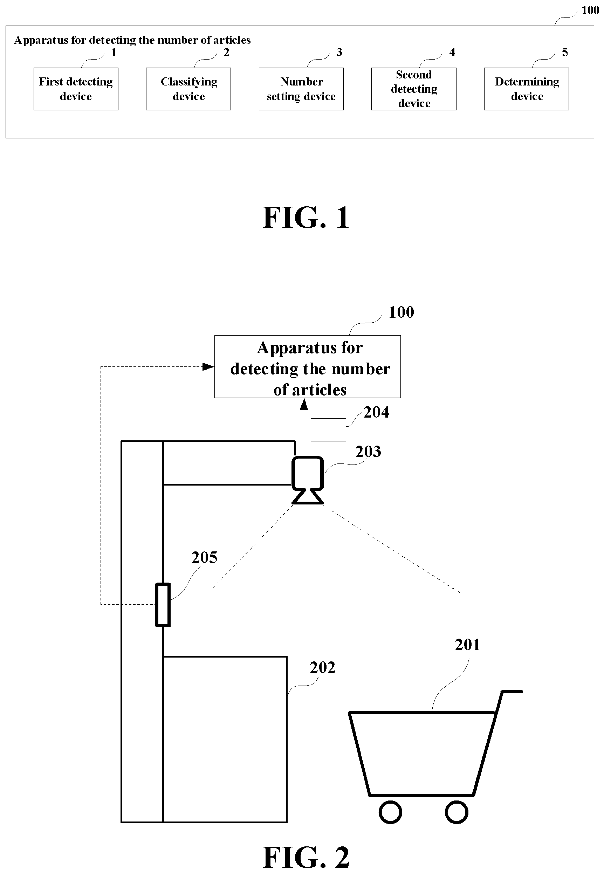

FIG. 1 is schematic diagram of the apparatus for detecting the number of articles of the embodiment of this disclosure. As shown in FIG. 1, an apparatus 100 for detecting the number of articles includes a first detecting device 1, a classifying device 2 and a number setting device 3.

In the embodiment of this disclosure, the first detecting device 1 detects a shopping container in an image; when the first detecting device 1 detects that there exists a shopping container in the image, the classifying device 2 classifies an image of articles in the shopping container by using a classifier, and determines the number of articles corresponding to a classification result; and the number setting device takes the number of articles determined by the classifying device 2 as a prediction value of the number of articles in the shopping container when the number of articles determined by the classifying device 2 is greater than a first threshold.

According to the embodiment of the first aspect of this disclosure, the number of the articles in the shopping container is determined by using a relationship between the number of the articles to which the result obtained by classifying the image corresponds and the threshold. Hence, the number of the articles in the shopping container may be accurately detected at a relatively low cost.

In at least one embodiment, the apparatus 100 for detecting the number of articles may be applicable to such sites as stores. FIG. 2 is a schematic diagram of an application scenario of an apparatus for detecting the number of articles of this disclosure.

As shown in FIG. 2, the shopping container may be a container for holding articles, such as a shopping basket or a shopping cart. The shopping container 201 in FIG. 2 is a shopping basket.

In at least one embodiment, the image of the article(s) in the shopping container may be an image obtained by shooting the article(s) in the shopping container by a camera which may be set in the shopping container or outside of the shopping container, such as at a cashier in a store, or other locations. The camera may shoot the articles in the shopping container from above to obtain the image.

For example, as shown in FIG. 2, the camera 203 is located near a cashier 202, and may capture an image of articles in a shopping container 201 from above, thereby obtaining an image 204 of the articles in the shopping container.

The apparatus 100 for detecting the number of articles may obtain the image 204 of the articles in the shopping container based on the camera 203, thereby detecting the number of the articles in the shopping container 201.

In at least one embodiment, the first detecting device 1 may detect the image captured by the camera 203, thereby detecting whether there exists a shopping container in the image. The first detecting device 1 may detect the shopping container in the image based on a common target detector.

In at least one embodiment, when the first detecting device 1 detects that there exists a shopping container in the image, the image may be taken as the image 204 of the articles in the shopping container, or, an area where the shopping container in the image is located may be intercepted to be taken as the image 204 of the articles in the shopping container.

In at least one embodiment, the classifying device 2 may classify the image 204 by using a classifier, so as obtain the number of articles corresponding to the classification result.

The classification result obtained by the classifying device 2 may correspond to the number of articles in the shopping container in the image 204. The classification result may include at least two categories, each corresponding to a range of the number of articles. The classifying device 2 may determine a corresponding number of articles according to the categories obtained by the classification. Table 1 below is an example of the categories, the range of the number of articles and corresponding number of articles.

**Table 1**

| class_num | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| num_range | 1-2 | 3-4 | 5-6 | 7-8 | 9-10 | 11-12 | 13-14 | 15-16 | 17-18 | 19-20 | 21-23 | 24-26 | 27-30 | 31-35 | 36~ |
| converted_num | 2 | 4 | 6 | 8 | 10 | 12 | 14 | 16 | 18 | 20 | 22 | 25 | 29 | 33 | 37 |

In the example shown in Table 1, there may be 15 categories, each category having a category number class_num, a value range of the category number class_num being 0-14. A range of the number of articles corresponding to each category is num _range; for example, when a category number class_num is 4, a corresponding number of articles is 9 or 10. In each range, a number is taken as the number converted_num of articles corresponding to the category, that is, the classifying device 2 determines the number converted_num of articles as the number of articles corresponding to the category. For example, the classifying device 2 classifies images 204 and obtains a category number class_num of 10, and a corresponding range of the number of articles is 21-23. A number 22 within this range is determined as the number converted_num of articles to which the category number class_num=10 corresponds.

It should be noted that the example shown in Table 1 is illustrative only, and there may exist other correspondences between the categories, the range of the number of articles and corresponding number of articles.

In at least one embodiment, the classifier used by the classifying device 2 may have a network structure of a residual network (Resnet) 50, for example. In addition, this application is not limited thereto, and the classifying device 2 may also use other types of classifiers.

In at least one embodiment, the classifier used by the classifying device 2 may be obtained by training by using training sample images. For example, a range num _range where the number of articles in the shopping container is located in the training sample images may be marked, so that the classifier obtained by training may accurately detect the number of articles in the shopping container in the images and output a corresponding category number class_num. As the range num _range where the number of articles in the shopping container is located in the training sample images is an objective numerical range, an error in marking the training samples is relatively small, and the classifier obtained after training is relatively high in classification accuracy.

In at least one embodiment, the number setting device 3 compares the numbers converted_num of articles corresponding to the classification result determined by the classifying device, and sets the prediction value predict_num of the number of articles in the shopping container according to a comparison result.

For example, in a case where the number converted_num of articles determined by the classifying device 2 is greater than a first threshold, the number setting device 3 takes the number converted_num of articles determined by the classifying device 2 as the prediction value of the number of articles in the shopping container. The first threshold is, for example, 10, that is, when the classification result of the classifying device 2 is a category number class_num of 5-14, the number setting device 3 takes the number converted_num of articles determined by the classifying device 2 as the prediction value of the number of articles in the shopping container. In addition, this application is not limited thereto, and the first threshold may also be other numerical values.

For another example, in a case where the number converted_num of articles determined by the classifying device 2 is less than or equal to the first threshold, the number setting device 3 may take the number converted_num of articles in the shopping container detected by the following second detecting device 4 as the prediction value of the number converted_num of articles in the shopping container.

As shown in FIG. 1, the apparatus 100 for detecting the number of articles may further include a second detecting device 4. The second detecting device 4 may detect the number of articles in the shopping container according to images 204 of the articles in the shopping container.

In at least one embodiment, the second detection device 4 may use a detection model to detect the images 204, thereby obtaining the number detect_num of articles in the shopping container. The detection model used by the second detecting device 4 may be based on an object detection algorithm, which may be a deep learning algorithm, such as a YOLO (You Only Look Once) algorithm, and furthermore, it may also be other algorithms.

In at least one example, the detection model may be trained by using images as training samples, so as to obtain a trained detection model, and the detecting device 1 detects the images 204 by using the trained model.

In at least one embodiment, an intersection over union (IOU) of the detecting device 1 for article detection may be greater than 0.5, i.e. IoU > 0.5, wherein the intersection over union refers to a ratio of an intersection of a border of the article detected by the detecting device 1 and an actual border of the article to a union to the border of the article detected by detecting device 1 and the actual border of the article. A precision of article detection by the detecting device 1 may be 0.8, and a recall rate may be 0.8.

As shown in FIG. 1, the apparatus for detecting the number of articles may further include a determining device 5.

The determining device 5 is able to determine a difference Error between the prediction value of the number detect_num of articles in the shopping container obtained by the number setting device 3 and a scanning value scanning_num, i.e. Error = predict_num - scanning_num.

The scanning value scanning_num is the number of articles obtained by a scanning device by scanning the articles in the shopping container. For example, as shown in FIG. 2, the scanning device 205 may be set near the cashier 202. The scanning device 205 may scan barcodes, or two-dimensional codes, or magnetic fields on the articles to obtain information on the number of articles and/or information on prices.

In at least one embodiment, the determining device 5 compares the difference Error with a second threshold, and generates alarm information when the difference is greater than or equal to the second threshold.

For example, when a customer checks out at the cashier 202, the articles may be taken out from the shopping container and scanned one by one on the scanning device 205 to proceed with checkout; after scanning, the number of articles obtained by the scanning device 205 is the scanning value scanning_ num, the number setting device 3 obtains the prediction value predict_num of the number of the articles based on the images of the articles in the shopping container, the determining device 5 calculates the difference Error between the prediction value predict_num and the scanning value scanning_ num, and generates alarm information when the difference Error is greater than or equal to the second threshold Th; and when a worker receives the alarm information, the number of articles in the shopping container may be manually verified. Hence, a situation where the articles in the shopping container are missed in scanning may be avoided.

In at least one embodiment, the second threshold Th used by the determining device 5 may be set according to a range where the prediction value value_num is located. For example, the larger the prediction value predict_num is, the larger the second threshold Th is.

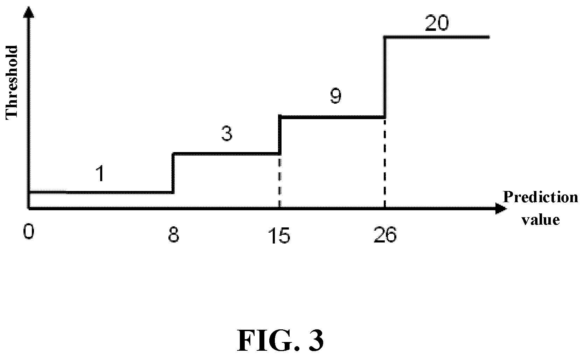

FIG. 3 is a schematic diagram of a correspondence between the second threshold and the prediction value. As shown in FIG. 3, different second thresholds Th may correspond to a range of different prediction values predict_num, that is, the second thresholds Th may change in stepped shapes relative to the prediction values predict_num. For example, the range of the prediction values predict_num is (0, 8], and the second threshold Th is 1; the range of the prediction values predict_num is (8, 15], and the second threshold Th is 3; the range of prediction value predict_num is (15, 26], and the second threshold Th is 9; the prediction value predict_num is greater than 26, and the second threshold Th is 20.

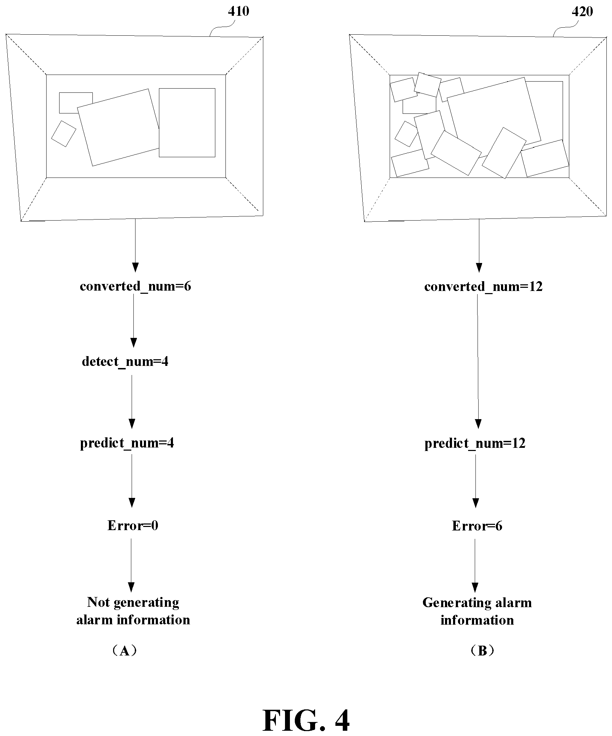

FIG. 4 is a schematic diagram of processing different images by the apparatus 100 for detecting the number of articles of this disclosure.

As shown in (A) of FIG. 4,
for the image 410 of the articles in the shopping container, the number converted_num of articles in the shopping container determined by the classifying device 2 is 6, which is less than the first threshold 10;
the second detecting device 4 detects image 410, and obtains that the detection value detect_Num of the number of articles in the shopping container is 4;
the number setting device 3 sets the prediction value predict_num of the articles in the shopping container to be the detection value detect_num, i.e. predict_num = 4;
when the prediction value predict_num is 4, a corresponding second threshold Th is 1;
and if the scanning value is scanning_num is 4, the difference Error between the prediction value predict_num and the scanning value scanning_num is 0, which is less than the second threshold Th; hence, the determining device 5 does not generate the alarm information.

As shown in (B) of FIG. 4,
for the image 420 of the articles in the shopping container, the number converted_num of articles in the shopping container determined by the classifying device 2 is 12, which is greater than the first threshold 10; hence, the number setting device 3 sets the prediction value predict_num of the articles in the shopping container to be the number converted_num of articles determined by the classifying device 2, i.e. predict_num = 12;
when the prediction value predict_num is 12, a corresponding second threshold Th is 5;
and if the scanning value is scanning_num is 6, the difference Error between the prediction value predict_num and the scanning value scanning_num is 6, which is greater than the second threshold Th; hence, the determining device 5 generates the alarm information.

It should be noted that the components or modules related to this disclosure are only described above. However, this disclosure is not limited thereto, and the apparatus 100 for detecting the number of articles may further include other components or modules, and reference may be made to related techniques for particulars of these components or modules.

Furthermore, for the sake of simplicity, connection relationships between the components or modules or signal profiles thereof are only illustrated in FIG. 24. However, it should be understood by those skilled in the art that such related techniques as bus connection, etc., may be adopted. And the above components or modules may be implemented by hardware, such as a processor, and a memory, etc., which are not limited in the embodiment of this disclosure.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

### Embodiment of a second aspect

The embodiment of this disclosure provides a method for detecting the number of articles, corresponding to the apparatus for detecting the number of articles in the embodiment of the first aspect, with contents identical to those in the embodiment of the first aspect being not going to be described herein any further.

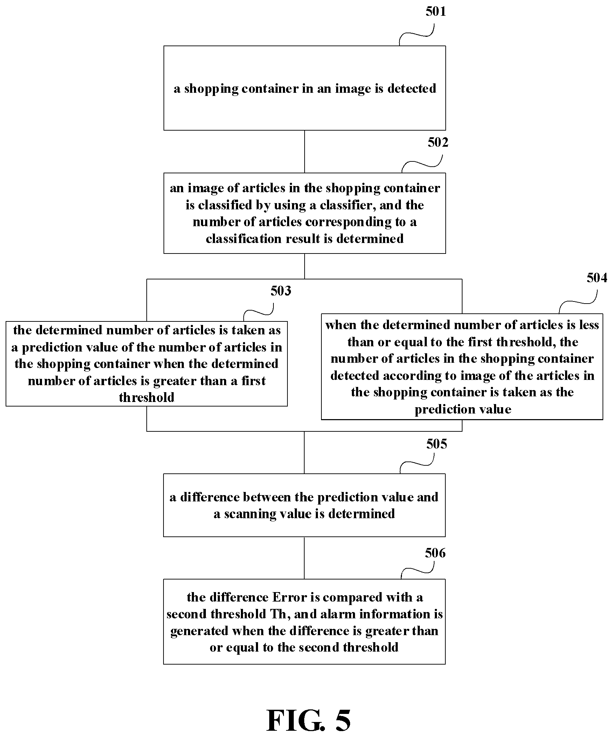

FIG. 5 is a schematic diagram of the method for detecting the number of articles. As shown in FIG. 5, the method includes:
operation 501: a shopping container in an image is detected;
operation 502: an image of articles in the shopping container is classified by using a classifier, and the number of articles corresponding to a classification result is determined; and
operation 503: the determined number of articles is taken as a prediction value of the number of articles in the shopping container when the determined number of articles is greater than a first threshold.

In operation 502, different categories of the classification results correspond to different numbers of articles.

According to operations 501, 502 and 503, the number of the articles in the shopping container may be accurately detected at a relatively low cost.

As shown in FIG. 5, the method for detecting the number of articles may further include:
operation 504: when the determined number of articles is less than or equal to the first threshold, the number of articles in the shopping container detected according to image of the articles in the shopping container is taken as the prediction value.

As shown in FIG. 5, the method for detecting the number of articles may further include:
operation 505: a difference between the prediction value and a scanning value is determined.

In operation 505, the scanning value scanning_num is the number of articles obtained by scanning the articles in the shopping container by a scanning device.

As shown in FIG. 5, the method for detecting the number of articles may further include:
operation 506: the difference Error is compared with a second threshold Th, and alarm information is generated when the difference is greater than or equal to the second threshold.

The second threshold Th used in operation 506 is set according to a range where the prediction value predict_num is located. For example, the larger the prediction value predict_num is, the larger the second threshold Th is.

The steps or processes related to this disclosure described above only. However, this disclosure is not limited thereto, and the method for detecting the number of articles may also include other steps or processes, and reference may be made to the related art for specific contents of these steps or processes. In addition, the embodiment of this disclosure is exemplarily described by taking some structures of the models used in the method for detecting the number of articles as examples. However, this disclosure is not limited to these structures, appropriate modifications may be made to these structures, and implementations of these modifications shall be included within the scope of the embodiments of this disclosure.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiment that according to the method for detecting the number of articles of this disclosure, the number of the articles in the shopping container is determined by using a relationship between the number of the articles to which the result obtained by classifying the image corresponds and the threshold. Hence, the number of the articles in the shopping container may be accurately detected at a relatively low cost.

### Embodiment of a third aspect

The embodiment of this disclosure provides an electronic device, including the apparatus 100 for detecting the number of articles as described in the embodiment of the first aspect, contents of which being incorporated herein. The electronic device is for example, a computer, a server, a working station, a laptop computer, and a smart mobile phone; however, the embodiment of this disclosure is not limited thereto.

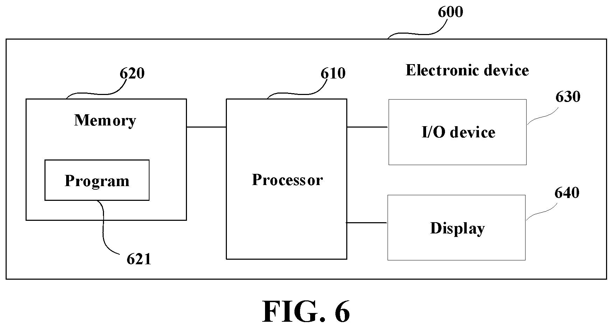

FIG. 6 is a schematic diagram of the electronic device of the embodiment of this disclosure. As shown in FIG. 6, the electronic device 600 may include a processor (such as a central processing unit (CPU)) 610 and a memory 620, the memory 620 being coupled to the CPU 610. The memory 620 may store various data, and furthermore, it may store a program 621 for information processing, and execute the program 621 under control of the processor 610.

In some embodiments, the functions of the apparatus 100 for detecting the number of articles may be integrated into the processor 610. The processor 610 is configured to carry out the method for detecting the number of articles as described in the embodiment of the second aspect.

In some embodiments, the apparatus 100 for detecting the number of articles and the processor 610 may be configured separately; for example, the apparatus for detecting the number of articles may be configured as a chip connected to the processor 610, and the functions of the apparatus for detecting the number of articles are executed under control of the processor 610.

For example, the processor 610 is configured to perform the following control: detecting a shopping container in an image; classifying an image of articles in the shopping container by using a classifier, and determining the number of articles corresponding to a classification result; and taking the determined number of articles as a prediction value of the number of articles in the shopping container when the determined number of articles is greater than a first threshold.

In at least some embodiments, the method for detecting the number of articles further includes: when the determined number of articles is less than or equal to the first threshold, taking the number of articles in the shopping container detected according to the image of the articles in the shopping container as the prediction value.

In at least some embodiments, the method for detecting the number of articles further includes: determining a difference between the prediction value and a scanning value, wherein the scanning value is the number of articles obtained by a scanning device by scanning the articles in the shopping container.

In at least some embodiments, the method for detecting the number of articles further includes: comparing the difference with a second threshold Th, and generating alarm information when the difference is greater than or equal to the second threshold.

In at least some embodiments, the second threshold is set according to a range where the prediction value is located.

In at least some embodiments, the larger the prediction value is, the larger the second threshold is.

In at least some embodiments, different categories of the classification results correspond to different numbers of articles.

Furthermore, as shown in FIG. 6, the electronic device 600 may include an input/output (I/O) device 630, and a display 640, etc., wherein, functions of the above components are similar to those in the related art, and shall not be described herein any further. It should be noted that the electronic device 600 does not necessarily include all the parts shown in FIG. 6, and furthermore, the electronic device 600 may include parts not shown in FIG. 6, and the related art may be referred to.

An embodiment of this disclosure provides a computer readable program, which, when executed in an electronic device, causes a computer to carry out the method for detecting the number of articles as described in the embodiment of the second aspect in the electronic device.

An embodiment of this disclosure provides a computer storage medium, including a computer readable program, which causes a computer to carry out the method for detecting the number of articles as described in the embodiment of the second aspect in an electronic device.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The method/apparatus described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

This disclosure further provides the following supplements.
1. A method for detecting the number of articles, including:
   detecting a shopping container in an image;
   classifying an image of articles in the shopping container by using a classifier, and determining the number of articles corresponding to a classification result; and
   taking the determined number of articles as a prediction value of the number of articles in the shopping container when the determined number of articles is greater than a first threshold.
2. The method according to supplement 1, wherein the method further includes:
   when the determined number of articles is less than or equal to the first threshold, taking the number of articles in the shopping container detected according to the image of the articles in the shopping container as the prediction value.
3. The method according to supplement 1, wherein the method for detecting the number of articles further includes:
   determining a difference between the prediction value and a scanning value,
   wherein the scanning value is the number of articles obtained by scanning the articles in the shopping container by a scanning device.
4. The method according to supplement 3, wherein the method for detecting the number of articles further includes:
   comparing the difference with a second threshold, and generating alarm information when the difference is greater than or equal to the second threshold.
5. The method for detecting the number of articles according to supplement 4, wherein,
   the second threshold is set according to a range where the prediction value is located.
6. The method for detecting the number of articles according to supplement 5, wherein,
   the larger the prediction value is, the larger the second threshold is.
7. The method for detecting the number of articles according to supplement 1, wherein,
   different categories of the classification results correspond to different numbers of articles.
8. A storage medium storing a computer readable program, wherein the computer readable program causes a processor coupled to the storage medium to execute the following method:
   detecting a shopping container in an image;
   classifying an image of articles in the shopping container by using a classifier, and determining the number of articles corresponding to a classification result; and
   taking the determined number of articles as a prediction value of the number of articles in the shopping container when the determined number of articles is greater than a first threshold.
9. The storage medium according to supplement 8, wherein the method further includes:
   when the determined number of articles is less than or equal to the first threshold, taking the number of articles in the shopping container detected according to the image of the articles in the shopping container as the prediction value.
10. The storage medium according to supplement 1, wherein,
   the method further includes:
   determining a difference between the prediction value and a scanning value,
   wherein the scanning value is the number of articles obtained by a scanning device by scanning the articles in the shopping container.
11. The storage medium according to supplement 1, wherein the method further includes:
   comparing the difference with a second threshold, and generating alarm information when the difference is greater than or equal to the second threshold.
12. The storage medium according to supplement 11, wherein,
   the second threshold is set according to a range where the prediction value is located.
13. The storage medium according to supplement 12, wherein,
   the larger the prediction value is, the larger the second threshold is.

## Claims

1. An apparatus for detecting the number of articles, **characterized in that** the apparatus for detecting the number of articles comprises:
a first detecting device configured to detect a shopping container in an image;
a classifying device configured to classify an image of articles in the shopping container by using a classifier, and determine the number of articles corresponding to a classification result; and
a number setting device configured to take the number of articles determined by the classifying device as a prediction value of the number of articles in the shopping container when the number of articles determined by the classifying device is greater than a first threshold.

2. The apparatus according to claim 1, wherein the apparatus further comprises:
a second detecting device configured to detect the number of articles in the shopping container according to the image of the articles in the shopping container,
wherein when the number of articles determined by the classifying device is less than or equal to the first threshold, the number setting device takes the number of articles detected by the second detecting device as the prediction value.

3. The apparatus for detecting the number of articles according to claim 1, wherein the apparatus for detecting the number of articles further comprises:
a determining device configured to determine a difference between the prediction value and a scanning value,
wherein the scanning value is the number of articles obtained by scanning the articles in the shopping container by a scanning device.

4. The apparatus for detecting the number of articles according to claim 3, wherein,
the determining device further compares the difference with a second threshold, and generates alarm information when the difference is greater than or equal to the second threshold.

5. The apparatus for detecting the number of articles according to claim 4, wherein,
the second threshold is set according to a range where the prediction value is located.

6. The apparatus for detecting the number of articles according to claim 5, wherein,
the larger the prediction value is, the larger the second threshold is.

7. The apparatus for detecting the number of articles according to claim 1, wherein,
different categories of the classification result correspond to different numbers of articles.

8. An electronic device, comprising the apparatus for detecting the number of articles as claimed in any one of claims 1-7.

9. A method for detecting the number of articles, **characterized in that** the method for detecting the number of articles comprises:
detecting a shopping container in an image;
classifying an image of articles in the shopping container by using a classifier, and determining the number of articles corresponding to a classification result; and
taking the determined number of articles as a prediction value of the number of articles in the shopping container when the determined number of articles is greater than a first threshold.

10. The method according to claim 9, wherein the method further comprises:
when the determined number of articles is less than or equal to the first threshold, taking the number of articles in the shopping container detected according to the image of the articles in the shopping container as the prediction value.
